# EUROPÄISCHE PATENTSCHRIFT

(11) **EP 2 098 019 B1**
(45) Veröffentlichungstag und Bekanntmachung des Hinweises auf die Patenterteilung: **29.08.2012**
(21) Anmeldenummer: 07847420.2
(22) Anmeldetag: 27.11.2007
(51) Int. Cl.: H04L 12/437

(54) **KOMMUNIKATIONSSYSTEM MIT EINER MASTER-SLAVE-STRUKTUR**
COMMUNICATION SYSTEM HAVING A MASTER/SLAVE STRUCTURE
SYSTÈME DE COMMUNICATION PRÉSENTANT UNE STRUCTURE MAÎTRE-ESCLAVE

(30) Priorität: 27.11.2006 DE 102006055887
(43) Veröffentlichungstag der Anmeldung: 09.09.2009
(73) Patentinhaber: Beckhoff Automation GmbH, 33415 Verl (DE)
(72) Erfinder: BÜTTNER, Holger, 12157 Berlin (DE); WEBER, Karl, 90518 Altdorf (DE)
(74) Vertreter: Patentanwaltskanzlei WILHELM & BECK
(86) Internationale Anmeldenummer: PCT/EP2007/062895
(87) Internationale Veröffentlichungsnummer: WO 2008/065118

(56) Entgegenhaltungen:
- WO-A-2004/084451
- WO-A-2006/108527
- DE-A1- 19 745 021

## Beschreibung

Die Erfindung betrifft ein Kommunikationssystem mit einer Master-Slave-Struktur und ein Verfahren zum Betreiben eines Kommunikationssystems mit einer Master-Slave-Struktur.

In der Fertigungs- und Automatisierungstechnik werden zunehmend serielle Bussysteme eingesetzt, bei denen die dezentral angeordneten Geräte einer Maschinenperipherie wie E/A-Module, Messumformer, Antriebe, Ventile und Bedienerterminals über ein leistungsfähiges Echtzeit-Kommunikationssystem mit Automatisierungs-, Engineerings- oder Visualisierungssystemen kommunizieren. Alle Teilnehmer sind dabei über einen seriellen Bus, vorzugsweise über einen Feldbus miteinander vernetzt, wobei der Datenaustausch über den Bus vorzugsweise auf der Grundlage des Master-Slave-Prinzips ausgeführt wird.

Die aktiven Busteilnehmer am Bussystem, in der Regel Steuergeräte, sind im Besitz einer Buszugriffsberechtigung und bestimmen den Datentransfer auf dem Bus. Die aktiven Busteilnehmer werden im Folgenden als die Master-Einheiten im seriellen Bussystem bezeichnet. Passive Busteilnehmer sind dagegen im Allgemeinen Maschinenperipheriegeräte. Sie besitzen keine Buszugriffsberechtigung, d.h. sie dürfen nur empfangene Informationssignale quittieren oder auf Anfrage einer Master-Einheit Informationssignale an diese übermitteln. Die passiven Busteilnehmer werden im Folgenden als Slave-Einheiten im seriellen Bussystem bezeichnet.

Feldbussysteme mit einer Master-Slave-Struktur werden im Allgemeinen, um eine aufwändige Verkabelung zu vermeiden, in Ringtopologie ausgeführt, wobei alle Busteilnehmer an einen ringförmigen Übertragungsweg angeschlossen sind. Ein von der Master-Einheit erzeugtes Datensignal wird von der Master-Einheit in den ringförmigen Übertragungsweg eingespeist und durchläuft nacheinander die seriell an den ringförmigen Übertragungsweg angeschlossenen Slave-Einheiten, um dann wieder von der Master-Einheit empfangen und ausgewertet zu werden.

Die Datensignale werden von der Master-Einheit in der Regel in Datenpakete organisiert, die sich aus Steuerdaten und Nutzdaten zusammensetzen, wobei vorzugsweise der Ethernet-Standard verwendet wird, der Datenpakete mit einer Länge von bis zu 1500 Byte bei einer gleichzeitig hohen Übertragungsgeschwindigkeit von 100 Mbit/sec ermöglicht. Jede der an den ringförmigen Übertragungsweg angeschlossenen Slave-Einheiten verarbeitet dann die für ihn bestimmten Nutzdaten der von der Master-Einheit auf dem ringförmigen Obertragungsweg eingespeisten Ethernet-Telegramme.

Die Master-Slave-Kommunikationssysteme mit Ringstruktur sind in der Regel so aufgebaut, dass die Master-Einheit eine Sendeeinheit als Dateneinkoppelstelle und eine Empfangseinheit als Datenauskoppelstelle aufweist. Die einzelnen Slave-Einheiten sind dann am Übertragungsweg zu einem Ring zusammengeschlossen, wobei jeder Teilnehmer mit zwei Nachbarn, der erste und der letzte Teilnehmer im Ring mit der Master-Einheit verbunden ist. Die Übertragung der Datenpakete erfolgt dabei in eine Richtung ausgehend von der Master-Einheit über deren Sendeeinheit zur ersten angeschlossenen Slave-Einheit und von dort zur nächsten, bis die in Datenrichtung letzte Slave-Einheit im Ring erreicht ist, und dann zurück zur Empfangseinheit der Master-Einheit.

Jede Slave-Einheit weist zum Empfang der umlaufenden Datenpakete vom vorherigen Teilnehmer einen ersten Anschluss und zur Weitergabe an den nachfolgenden Teilnehmer einen zweiten Anschluss auf, wobei zwischen den beiden Anschlüssen eine Verarbeitungseinrichtung angeordnet ist, um die durch die Slave-Einheit durchlaufenden Datenpakete zu verarbeiten.

Eine zentrale Anforderung an Master-Slave-Kommunikationssysteme, insbesondere beim Einsatz in der Fertigungs- und Prozessautomatisierung, ist eine hohe Fehlertoleranz, also die Fähigkeit des Kommunikationssystems trotz des Auftretens von Fehlern die geforderte Funktion, z.B. die Herstellung eines Werkstücks durchzuführen. Fehler im Kommunikationssystem, die ohne Beeinträchtigung des Fertigungsprozesses überstanden werden müssen, sind dabei neben Fehlern in den Datenpaketen insbesondere auch der Ausfall eines Teilnehmers im Übertragungsweg bzw. eine Unterbrechung des Übertragungsweges beispielsweise durch physikalisches Durchtrennen des Übertragungsmediums.

Um ein fehlertolerantes Master-Slave-Kommunikationssystem, insbesondere bei Streckenfehlern, d.h. beim Ausfall ganzer Übertragungsabschnitte, zu erreichen, werden oft Doppelringstrukturen eingesetzt. So ist in der US 4,663,748 ein Kommunikationssystem mit einer Master-Slave-Struktur beschrieben, bei dem die Master-Einheit mit einer Mehrzahl von Slave-Einheiten seriell über zwei gegenläufig arbeitende Kommunikationspfade verbunden ist. Die Master-Einheit weist dabei zwei Sende- und Empfangseinrichtungen mit entsprechenden Sendern bzw. Empfängern und zugehörigen Steuerungen auf, um Datenpakete gleichzeitig über die beide Kommunikationspfade umlaufen zu lassen. Die Slave-Einheit besitzt dann eine Kopplungseinrichtung, um bei Auftreten eines Streckenfehlers, z.B. dem Bruch einer Kommunikationsleitung, durch Überwachung der Datenpakete auf den beiden Kommunikationspfaden und entsprechendes Umschalten das Kommunikationssystem so zu rekonfigurieren, dass ein durch den Streckenfehler bedingter Ausfall eines größeren Abschnitts des Kommunikationssystems oder sogar ein Gesamtausfall vermieden wird.

Fehlertolerante Master-Slave-Kommunikationssysteme mit einer Doppelringstruktur, bei denen die Master-Einheit jeweils zwei Sende- und Empfangseinrichtungen mit entsprechenden Sendern bzw. Empfängern und zugehörigen Steuerungen, um Datenpakete auf die beiden Kommunikationspfade auszugeben, aufweisen, sorgt für einen hohen Hardware- und Schaltaufwand der Master-Einheit und erhöht somit wesentlich die Kosten.

Aus der DE 197 45 021 A1 ist eine Kommunikationseinheit mit zwei mit einem ersten Kommunikationspfad verbundenen Anschlüssen, zwei mit einem zweiten Kommunikationspfad verbundenen Anschlüssen, einer mit dem einen ersten Anschluss verbundenen Sendeeinheit zum Senden von Datensignalen, einer mit dem weiteren ersten Anschluss verbundenen Empfangseinheit zum Empfangen von Datensignalen und einer Kopplungseinrichtung, die im Fehlerbetrieb die beiden Anschlüsse kurzschließt, bekannt.

Aus der WO 2006/108527 A ist weiter ein Kommunikationssystem mit einer Master-Einheit und einer Mehrzahl von Slave-Einheiten bekannt. Die Master-Einheit und die Slave-Einheiten weisen jeweils zwei mit einem ersten Kommunikationspfad verbundene erste Anschlüsse und zwei mit einem zweiten Kommunikationspfad verbundene zweite Anschlüsse auf. Die ersten Anschlüsse der Master-Einheit und der Slave-Einheiten sind über einen ersten Kommunikationspfad zu einer Ringstruktur verbunden. Die zweiten Anschlüsse der Master-Einheit und der Slave-Einheiten sind über einen zweiten Kommunikationspfad zu einer zweiten Ringstruktur verbunden. Jede Slave-Einheit weist eine Slave-Kopplungseinrichtung auf, die im Fehlerbetrieb den ersten Kommunikationspfad und den zweiten Kommunikationspfad zwischen den ersten Anschlüssen und den zweiten Anschlüssen kurzschließt. Die Master-Einheit weist eine mit dem ersten Anschluss verbundene Sendeeinheit zum Empfangen von Datensignalen und eine mit dem weiteren ersten Anschluss verbundene Empfangseinheit zum Empfangen von Datensignalen auf.

Aufgabe der vorliegenden Erfindung ist es, ein Kommunikationssystem mit einer Master-Slave-Struktur und ein Verfahren zum Betreiben eines Kommunikationssystems mit einer Master-Slave-Struktur bereitzustellen, die bei einem minimalen Hardware- und Schaltaufwand die Möglichkeit einer Rekonfiguration der Master-Slave-Struktur in Echtzeit bei Auftreten von Streckenfehlern ermöglichen.

Diese Aufgabe wird durch ein Kommunikationssystem nach Anspruch 1 und ein Verfahren nach Anspruch 5 gelöst. Bevorzugte Weiterbildungen sind in den abhängigen Ansprüchen angegeben.

Erfindungsgemäß sind in einem Kommunikationssystem erste und zweite Anschlüsse einer Master-Einheit und einer Mehrzahl von Slave-Einheiten jeweils über einen ersten und zweiten Kommunikationspfad zu einer ersten und zweiten Ringstruktur verbunden. Im Normalbetrieb erfolgt eine ringförmige Datenübertragung über den ersten Kommunikationspfad ausgehend von einem ersten Anschluss der Master-Einheit zur in Übertragungsrichtung ersten über den ersten Kommunikationspfad angeschlossenen Slave-Einheit, von dort zur in Übertragungsrichtung nächsten über den ersten Kommunikationspfad angeschlossenen Slave-Einheit, bis zur in Übertragungsrichtung letzten über den ersten Kommunikationspfad angeschlossenen Slave-Einheit und dann zu einem weiteren ersten Anschluss der Master-Einheit. Im Fehlerbetrieb erfolgt eine schleifenförmige Datenübertragung über den ersten Kommunikationspfad und den zweiten Kommunikationspfad ausgehend von dem einen ersten Anschluss der Master-Einheit zur in Übertragungsrichtung ersten über den ersten Kommunikationspfad angeschlossenen Slave-Einheit, von dort zur in Übertragungsrichtung nächsten über den ersten Kommunikationspfad angeschlossenen Slave-Einheit, bis in Übertragungsrichtung eine über den ersten Kommunikationspfad angeschlossene Slave-Einheit im Fehlerbetrieb erreicht ist, dann von der Slave-Einheit im Fehlerbetrieb zurück über den zweiten Kommunikationspfad zu dem einem zweiten Anschluss der Master-Einheit, von dem einen zweiten Anschluss der Master-Einheit zu dem weiteren zweiten Anschluss der Master-Einheit, von dem weiteren zweiten Anschluss der Master-Einheit zur in Übertragungsrichtung ersten über den zweiten Kommunikationspfad angeschlossenen Slave-Einheit, von dort zur in Übertragungsrichtung nächsten über den zweiten Kommunikationspfad angeschlossenen Slave-Einheit bis in Übertragungsrichtung eine über den zweiten Kommunikationspfad angeschlossene Slave-Einheit im Fehlerbetrieb erreicht ist, dann von der Slave-Einheit im Fehlerbetrieb zurück über den ersten Kommunikationspfad zu einem weiteren ersten Anschluss der Master-Einheit.

Mit der erfindungsgemäßen Auslegung des Master-Slave-Kommunikationssystems lässt sich bei minimalem Hard- und Schaltaufwand und damit reduzierten Kosten eine hohe Fehlertoleranz bei einer Unterbrechung des regulären Kommunikationspfads, z.B. bei Leitungsbruch oder Ausfall einer Slave-Einheit erreichen. Erfindungsgemäß wird im Kommunikationssystem eine Doppelringtopologie eingesetzt, wobei die Master-Einheit jedoch, wie bei einer Einfachringarchitektur, nur eine Sende- und Empfangseinheit aufweist.

Im Normalbetrieb erfolgt die Datenübertragung ausschließlich über den ersten regulären Kommunikationspfad, wobei ausgehend von der Sendeeinheit der Master-Einheit die Datenpakete nacheinander alle in Reihe an den regulären Kommunikationspfad angeschlossenen Slave-Einheiten durchlaufen und dann zu der Empfangseinheit der Master-Einheit rückgekoppelt werden. Bei einer Unterbrechung des regulären Kommunikationspfad wird ein Fehlerbetrieb im Kommunikationssystem angestoßen, bei dem eine schleifenförmige Datenübertragung über den regulären Kommunikationspfad und den zweiten Ersatzkommunikationspfad mit der Master-Einheit im Kreuzungspunkt durchgeführt wird, wobei die Datenpakete ausgehend von der Sendeeinheit der Master-Einheit über den regulären Kommunikationspfad nacheinander die Slave-Einheiten bis zur einer vor der Unterbrechungsstelle im regulären Kommunikationspfad angeordneten Slave-Einheit durchlaufen. Diese Slave-Einheit schließt den regulären Kommunikationspfad mit dem Ersatzkommunikationspfad kurz, sodass die Datenpakete über den Ersatzkommunikationspfad auf den einen zweiten Anschluss der Master-Einheit rückgekoppelt werden. Die Master-Einheit schließt den einen zweiten Anschluss an den Ersatzkommunikationspfad mit dem weiteren zweiten Anschluss an den Ersatzkommunikationspfad kurz und schickt dann die Datenpakete über den weiteren zweiten Anschluss des Ersatzkommunikationspfades durch die daran angeschlossenen Slave-Einheiten, bis wiederum eine vor der Unterbrechungsstelle im regulären Kommunikationspfad angeordnete Slave-Einheit erreicht ist. Diese Slave-Einheit schaltet den Ersatzkommunikationspfad mit dem regulären Kommunikationspfad zusammen, sodass die Datenpakete auf dem regulären Kommunikationspfad zur Empfangseinheit der Master-Einheit rückgekoppelt werden.

Die Fehlertoleranzfunktionalität wird durch Slave-Kopplungseinrichtungen in den beiden an die Unterbrechungsstelle im regulären Kommunikationspfad angrenzenden Slave-Einheiten bzw. eine Master-Kopplungseinrichtung in der Master-Einheit bewirkt, die automatisch bei Auftreten des Streckenfehlern im regulären Kommunikationspfad den Übertragungsweg im Kommunikationssystem rekonfigurieren.

Erfindungsgemäß weist die Master-Einheit zwei mit dem ersten regulären Kommunikationspfad verbundene erste Anschlüsse und zwei mit dem zweiten Ersatzkommunikationspfad verbundene zweite Anschlüsse auf. Mit den beiden ersten Anschlüssen sind die Sendeeinheit zum Senden von Datensignalen und die Empfangseinheit zum Empfangen von Datensignalen verbunden. Die Master-Kopplungseinrichtung der Master-Einheit schließt im Fehlerbetriebsfall, also bei Auftreten eines Streckenfehlers im ersten regulären Kommunikationspfad die beiden zweiten Anschlüsse kurz, sodass eine schleifenförmige Datenübertragung über den ersten und zweiten Kommunikationspfad stattfinden kann.

Mit der erfindungsgemäßen Auslegung der Master-Einheit ist es somit möglich in der Doppelringstruktur eine Master-Einheit, wie sie auch in der Einfachringarchitektur eingesetzt wird, zu verwenden, die nur eine Sende- und Empfangseinheit aufweist. Zusätzlich sind dann Anschlüsse für die zweite Ringstruktur und eine Master-Kopplungseinrichtung vorgesehen, die die zweiten Anschlüsse der zweite Ringstruktur im Streckenfehlerfall auf der ersten Ringstruktur zusammenschaltet, um eine Rekonfiguration des Datenübertragungsweges durchzuführen.

Die Erfindung wird anhand der beigefügten Zeichnungen näher erläutert. Es zeigen:
Figur 1 eine schematische Darstellung eines erfindungsgemäßen Kommunikationssystems mit einer Master-Slave-Struktur, wobei eine Master-Einheit seriell über eine Doppelringstruktur mit Slave-Einheiten verbunden ist, wobei
Figur 1A den Normalbetrieb,
Figur 1B einen ersten Kommunikationssystem-Rekonfigurationsbetrieb bei Auftreten eines Streckenfehlers und
Figur 1C einen zweiten Kommunikationssystem-Rekonfigurationsbetrieb bei Ausfall einer Slave-Einheit darstellen; und
Figur 2 eine schematische Darstellung einer Slave-Einheit.

In der Automatisierungstechnik werden zunehmend Feldbussysteme eingesetzt, bei denen verteilt angeordnete Geräte der Maschinenperipherie mit Automatisierungs-, Engineerings- und Visualisierungssystemen über einen Feldbus kommunizieren. Das Feldbussystem weist in der Regel einen seriellen Bus auf, welcher beispielsweise eine elektrische Leitung, ein Lichtleiter oder ein Radiokabel sein kann. An diesen Feldbus sind alle Bussteilnehmer angeschlossen, wobei zwischen aktiven und passiven Bussteilnehmern unterschieden wird. Die aktiven Bussteilnehmer am Feldbussystem sind die Master-Einheiten, die den Datenverkehr auf dem Bus regeln. Eine solche Master-Einheit ist z.B. ein Industrie-PC, der als Prozessleitrechner in einer Fertigungsstraße dient. Die Master-Einheit besitzt eine Buszugriffsberechtigung und kann Daten ohne externe Aufforderung auf den Feldbus ausgeben. Die passiven Busteilnehmer am Bussystem sind Maschinenperipheriegeräte, z.B. E/A-Geräte, Ventile, Antreibe und Messumformer. Sie dienen als Slave-Einheiten und besitzen keine Buszugriffsberechtigung, d.h. sie dürfen nur empfangene Datensignale quittieren oder auf Anfrage einer Master-Einheit Datensignale an diese übermitteln.

Als Kommunikationsstandard zur Datenübertragung im Master-Slave-Kommunikationssystem wird vorzugsweise das Ethernetkonzept eingesetzt. Bei Ethernet-Kommunikationssystemen werden die zu übermittelnden Daten in Form von Datenpaketen, im Weiteren auch als Telegramme bezeichnet, mit einem vorgegebenen Format verkapselt. Die Ethernet-Telegramme können dabei eine Datenlänge von bis zu 1500 Bytes aufweisen, wobei zusätzlich zu den Nutzdaten Steuerdaten, die eine Anfangskennung, eine Ziel- und Quelladresse, den Datenpaket-Typ und einen Fehlermechanismus aufweisen, enthalten sind.

Ethernet-Kommunikationssystem mit einer Master-Slave-Struktur sind vorzugsweise so ausgelegt, dass die einzelnen Slave-Einheiten über das Übertragungsmedium zu einer Kette zusammengeschlossen sind, wobei jede Slave-Einheit mit zwei Nachbarn, die erste und die letzte Slave-Einheit in der Kette dabei mit der Master-Einheit verbunden sind, sodass sich eine Ringstruktur ergibt. Die Datenübertragung erfolgt in eine Richtung ausgehend von der Master-Einheit zur ersten benachbarten Slave-Einheit und von dort zur nächsten bis zur letzten Slave-Einheit und dann zurück zur Master-Einheit.

Um eine hohe Fehlertoleranz insbesondere bei Streckenfehlern im Kommunikationssystem, d.h. bei Ausfall ganzer Übertragungsabschnitte mit Slave-Einheiten, z.B. durch Kabelbruch zu gewährleisten, weisen Master-Slave-Kommunikationssysteme einen zweiten Ersatz-Kommunikationspfad auf, der die Master-Einheiten mit den Slave-Einheiten zu einer weiteren Ringstruktur verbindet.

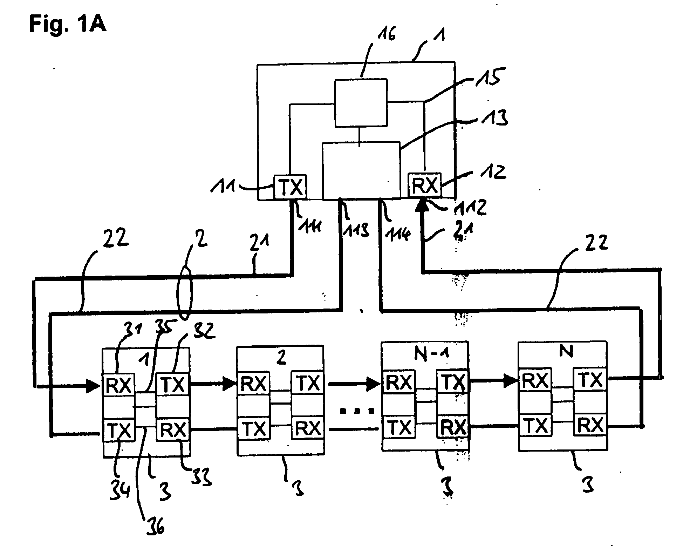

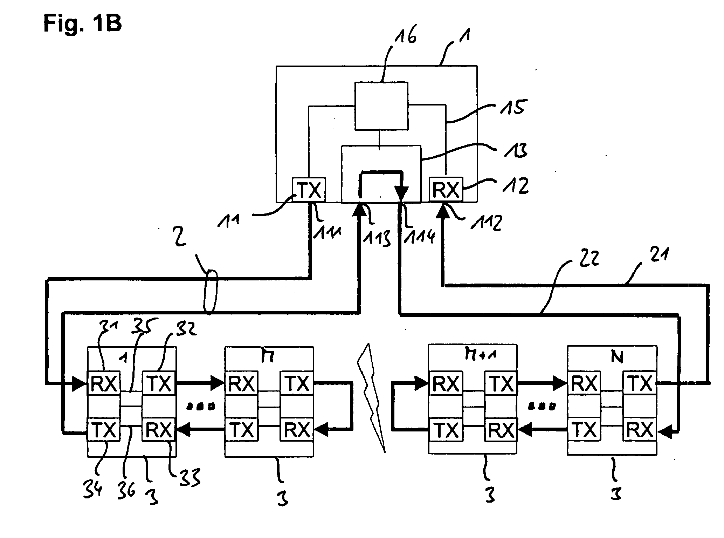

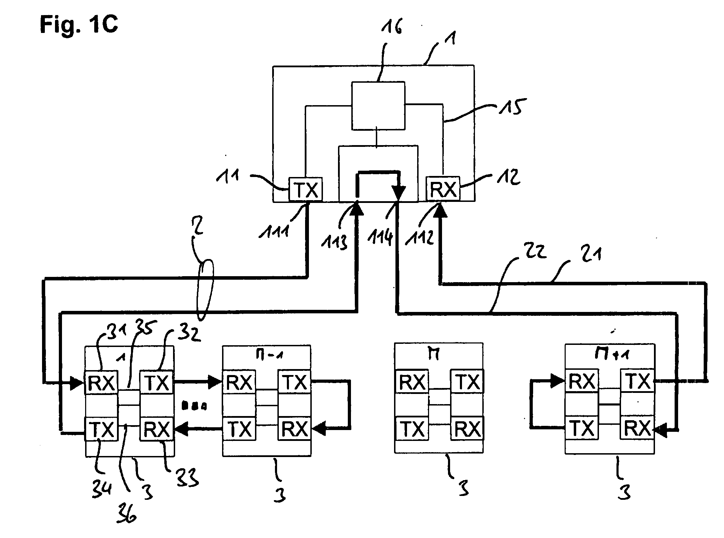

Figur 1 zeigt in einem Prinzipschaltbild ein solches fehlertolerantes Master-Slave-Kommunikationssystem, wobei Figur 1A den Normalbetrieb, Figur 1B einen ersten Rekonfigurationsbetrieb bei Auftreten eines Streckenfehlers und Figur 1C einen zweiten Rekonfigurationsbetrieb bei Ausfall einer Slave-Einheit darstellen. Das Kommunikationssystem weist eine Master-Einheit 1 auf, die über eine Doppelringstruktur 2 mit N Slave-Einheiten 3 seriell verbunden ist. Die Doppelringstruktur umfasst zwei getrennte Datenübertragungswege, die die Master-Einheit jeweils mit den N Slave-Einheiten 3 verbinden und somit einen eigenständigen Kommunikationspfad 21, 22 bilden. Als Übertragungsweg kann dabei eine elektrische Leitung, ein Lichtfaserkabel oder auch ein Radiokabel dienen.

Die Master-Einheit 1 weist eine Sendeeinheit TX 11 und eine Empfangseinheit RX 12 auf. Die Sendeeinheit TX 11 ist über einen ersten Anschluss 111 mit dem einem Ende des ersten Kommunikationspfads 21 und die Empfangseinheit RX 12 über einen zweiten Anschluss 112 mit dem zweiten Ende des ersten Kommunikationspfads 21 verbunden. Ferner enthält die Master-Einheit 1 eine Master-Kopplungseinrichtung 13, die über einen dritten Anschluss 113 und einen vierten Anschluss 114 jeweils mit einem Ende des zweiten Kommunikationspfad 22 verbunden ist. Die Sendeeinheit TX 11, die Empfangseinheit RX 12 und die Master-Kopplungseinheit 13 sind über Steuerleitungen 15 an eine zentralen Steuereinheit 16 der Master-Einheit 1 angeschlossen.

Jede Slave-Einheit 3 weist zum Empfang der Datenpakete von einem vorherigen Teilnehmer über den ersten Kommunikationspfad 21 einen ersten Anschluss mit einer erste Empfangseinheit RX 31 und zur Weitergabe an den nächsten Teilnehmer über den ersten Kommunikationspfad 21 einen weiteren ersten Anschluss mit einer ersten Sendeeinheit TX 32 auf. Ferner weist jede Slave-Einheit 3 zum Empfang der Datenpakete über den zweiten Kommunikationspfad 22 von einem vorherigen Teilnehmer einen zweiten Anschluss mit einer zweiten Empfangseinheit RX 33 und zur Weitergabe über den zweiten Kommunikationspfad 22 an den folgenden Teilnehmer einen weiteren zweiten Anschluss mit einer zweiten Sendeeinheit TX 34 auf. Zwischen die erste Empfangseinheit RX 31, die zweite Empfangseinheit RX 32, die erste Sendeeinheit TX 33 und die zweite Sendeeinheit TX 34 ist in jeder Slave-Einheit 3 eine Verarbeitungseinheit 35 und eine Slave-Kopplungseinrichtung 36 geschaltet.

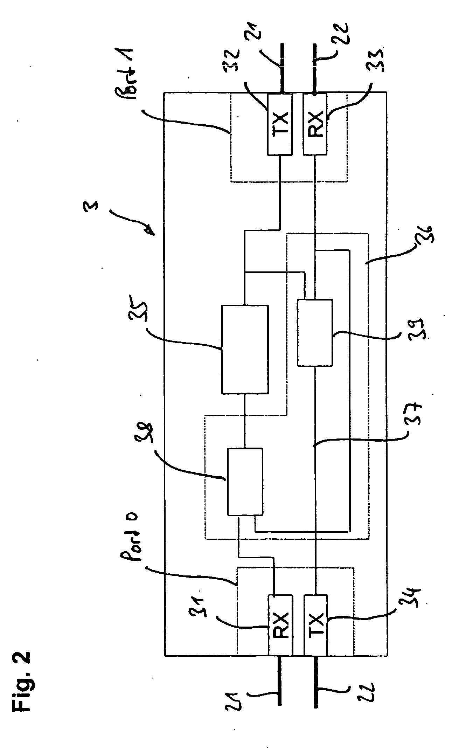

Ein Prinzipschaltbild einer möglichen Ausführungsform einer Slave-Einheit 3 ist in Figur 2 dargestellt. In der Slave-Einheit 3 sind die erste Empfangseinheit RX 31, die an den erste Kommunikationspfad 21 angeschlossen ist, und die zweite Sendeeinheit TX 34, die an den zweiten Kommunikationspfad 22 angeschlossen ist, als Port 0 gruppiert. Die zweite Empfangseinheit RX 33, die an den zweiten Kommunikationspfad 22 angeschlossen ist, und die erste Sendeeinheit TX 32, die an den ersten Kommunikationspfad 21 angeschlossen ist, sind zu Port 1 zusammengefasst. Die Slave-Kopplungseinrichtung 36 weist einen ersten Umschalter 38 und einen zweiten Umschalter 39 auf, die jeweils als 2-1 Multiplexer ausgelegt sind.

Die Empfangs- und Sendeeinheiten 31, 32, 33, 34, die Multiplexer 38, 39, die Slave-Kopplungseinrichtung 36 und die Verarbeitungseinheit 35 sind über ein Leitungsnetz 37 miteinander verschaltet. Die erste Empfangseinheit RX 31 ist mit dem ersten Eingang des ersten Multiplexers 38 verbunden. Der zweite Eingang des ersten Multiplexers 38 ist an die zweite Empfangseinheit RX 33 angeschlossen. Der Ausgang des ersten Multiplexers 38 ist ferner mit der Verarbeitungseinheit 35 verbunden. Der zweite Multiplexer 39 ist wiederum mit seinem ersten Eingang an die zweite Empfangseinheit RX 33 und mit seinem zweiten Eingang an die Verarbeitungseinheit 35 angeschlossen. Der Ausgang des Multiplexers 39 ist mit der zweiten Sendeeinheit TX 34 verbunden. Ferner ist die Verarbeitungseinheit 35 mit der ersten Sendeeinheit TX 32 verbunden.

Beim störungsfreien Normalbetrieb des Master-Slave-Kommunikationssystems, wie er in Figur 1A gezeigt ist, wird ein von der zentralen Steuereinheit 16 der Master-Einheit 1 erzeugtes Datenpaket über die Sendeeinheit TX 11 und den einen ersten Anschluss 111 auf den ersten Kommunikationspfad 21 ausgegeben. Das Telegramm läuft dann auf dem ersten Kommunikationspfad 21 um, wobei die daran angeschlossenen Slave-Einheiten 3 nacheinander durchlaufen werden. Die Multiplexer 38, 39 der Slave-Kopplungseinrichtungen 36 in den Slave-Einheiten 3 sind so geschaltet, dass die Verarbeitungseinheit 35 mit der ersten Empfangseinheit RX 31 und der ersten Sendeeinheit TX 32 verbunden ist. Nachdem das Datenpaket die letzte Slave-Einheit N durchlaufen hat, wird es über den ersten Kommunikationspfad 21 und den weiteren ersten Anschluss 112 auf die Empfangseinheit RX 12 der Master-Einheit 1 zurückgekoppelt, die das empfangene Datenpaket zur Auswertung an die zentrale Steuereinheit 16 weiterreicht.

Im störungsfreien Normalbetrieb sind die zweiten Anschlüsse 113, 114 der Master-Kopplungsrichtung 13, die mit dem zweiten Kommunikationspfad 22 verbunden sind, geschlossen. Es werden also von der Master-Einheit 1 nur Telegramme über den ersten Kommunikationspfad 21 übertragen und von den Verarbeitungseinrichtungen 35 der Slave-Einheiten 3 im Durchlauf verarbeitet. Auf dem zweiten Kommunikationspfad 22 findet keine Datenübertragung statt.

Das in Figur 1 gezeigte Master-Slave-Kommunikationssystem besitzt im Störfall, wenn ein Streckenfehler im ersten Kommunikationspfad 21 auftritt, die Fähigkeit zur Rekonfiguration, um so die Datenübertragung im System aufrecht zu erhalten. Bei Auftreten eines Streckenfehlers im ersten Kommunikationspfad 21 gehen die beiden an die Fehlerstelle angrenzenden Slave-Einheiten automatisch in einen Fehlerbetrieb über, bei dem die Slave-Kopplungseinrichtung 36 den ersten und den zweiten Kommunikationspfad 21, 22 kurzschließt, um die Datenpaketen von dem einen Kommunikationspfad auf den anderen Kommunikationspfad umzulenken. Parallel mit Aufnahme des Fehlerbetriebes durch die an den Streckenfehler im ersten Kommunikationspfad 21 angrenzenden Slave-Einheiten 3 nimmt auch die Master-Einheit 1 den Fehlerbetrieb auf, indem die Master-Kopplungseinrichtung 13 die beiden zweiten Anschlüsse 113, 114, die an die der zweite Kommunikationspfad 22 angeschlossen sind, öffnet und miteinander kurzschließt.

Im Fehlerbetrieb folgt dann eine schleifenförmige Datenübertragung über den ersten und zweiten Kommunikationspfad 21, 22 ausgehend von der Sendeeinheit RX 11 der Master-Einheit 1 über den einen ersten Anschluss 111 und den ersten Kommunikationspfad 21 zur in Datenübertragungsrichtung ersten über den ersten Kommunikationspfad 21 angeschlossenen Slave-Einheit 3. Von dort erfolgt die Datenübertragung dann zur nächsten über den ersten Kommunikationspfad 21 angeschlossenen Slave-Einheit 3, bis in Datenübertragungsrichtung eine erste Slave-Einheit im Fehlerbetrieb erreicht ist. In der ersten Slave-Einheit 3 im Fehlerbetrieb wird das Datenpaket auf den zweiten Kommunikationspfad 22 umgelenkt und dann über den zweiten Kommunikationspfad und die daran angeschlossenen Slave-Einheiten zu dem einen zweiten Anschluss 113 der Master-Kopplungseinrichtung 13 geführt.

Das Datenpaket wird dann in der Master-Kopplungseinrichtung 13 von dem einen zweiten Anschluss 113 auf den weiteren zweiten Anschluss 114 durchgeschaltet und zur in Datenübertragungsrichtung ersten über den zweiten Kommunikationspfad 22 angeschlossenen Slave-Einheit 3 weitergeleitet. Von dort wird das Datenpaket zur in Datenübertragungsrichtung nächsten über den zweiten Kommunikationspfad 22 angeschlossenen Slave-Einheit 3 weitergereicht, bis in Datenübertragungsrichtung eine zweite Slave-Einheit 3 im Fehlerbetrieb erreicht ist. Die zweite Slave-Einheit im Fehlerbetrieb schickt dann das Datenpaket über den ersten Kommunikationspfad 21 zu dem weiteren ersten Anschluss 112 der Empfangseinheit RX 12 der Master-Einheit 1 zurück.

Figur 1B zeigt den Verlauf der Datenübertragung (Pfeil) im Master-Slave-Kommunikationssystem bei Auftreten eines Streckenfehlers zwischen der Slave-Einheit M und der Slave-Einheit M+1. Die Slave-Einheiten 1 bis M-1 und M+2 bis N befinden sich im Normalbetriebmodus, die Slave-Einheiten M und M+1 sowie die Master-Einheit 1 dagegen im Fehlerbetriebsmodus. Figur 1C stellt die Rekonfiguration der Datenübertragung (Pfeil) im Master-Släve-Kommunikationssystem bei einem Komplettausfall der Slave-Einheit M dar, was gleichbedeutend mit dem Auftreten von zwei Streckenfehlern zwischen der Slave-Einheit M-1 und der Slave-Einheit M und zwischen der Slave-Einheit M+1 und der Slave-Einheit M ist. Die Slave-Einheiten 1 bis M-2 und die Slave-Einheiten M+2 bis N arbeiten im Normalbetrieb. Die Slave-Einheiten M-1 und M+1 sowie die Master-Einheiten 1 befindet sich im Fehlerbetriebsmodus.

Die Rekonfiguration bei Auftreten eines Streckenfehlers wird dabei durch die beiden Ports 0, 1 der den Streckenfehler benachbarten Slave-Einheiten (3) ausgelöst. Die Ports 0, 1 der Slave-Einheiten 3 können mithilfe eines Erkennungsverfahren feststellen, ob über die beiden Kommunikationspfade (21, 22) mit der benachbarten Slave-Einheit kommuniziert werden kann. Wenn ein Streckenfehler von einem Port der Slave-Einheit 3 erkannt wird, wird ein entsprechender Fehlerbetrieb in der Slave-Einheit 3 mithilfe der Slave-Kopplungseinrichtung 36 angestoßen.

Beim Feststellen eines Kommunikationsfehler über den Kommunikationspfad 21 durch den Port 1 der Slave-Einheit 3, wie er bei dem in Figur 1B gezeigten Streckenfehler in der Slave-Einheit M bzw. beim in Figur 1C gezeigten Geräteausfall in der Slave-Einheit M-1 auftritt, wird mithilfe der Slave-Kopplungseinrichtung 36 die Verarbeitungseinheit 35 mit der ersten Empfangseinheit RX 31 und der zweiten Sendeeinheit TX 34 verbunden. Das auf dem ersten Kommunikationspfad 21 in der Slave-Einheit 3 eintreffende Telegramm wird so über die Verarbeitungseinheit 35 auf den zweiten Kommunikationspfad 22 zurückgekoppelt. Bei der in Figur 2 gezeigten Auslegung der Slave-Kopplungseinrichtung 36 in der Slave-Einheit 3 erfolgt diese Umlenkung des Datenpaketes nach der Verarbeitung durch die Verarbeitungseinrichtung 35, indem der zweite Eingang des zweiten Multiplexers 39 auf seinem Ausgang geschaltet wird.

Beim Feststellen eines Kommunikationsfehler über den Kommunikationspfad 21 durch den Port 0 der Slave-Einheit 3, wie er bei dem in Figur 1B gezeigten Streckenfehler in der Slave-Einheit M + 1 und bei dem in Figur 1C gezeigten Geräteausfall in der Slave-Einheit M +1 auftritt, wird durch die Slave-Kopplungseinrichtung 36 in der Slave-Einheit 3 die Verarbeitungseinheit 35 mit der zweiten Empfangseinheit RX 33 und mit der ersten Sendeeinheit TX 32 verbunden, sodass das auf den zweiten Kommunikationspfad 22 eintreffende Telegramm nach der Verarbeitung durch die Verarbeitungseinheit 35 auf den ersten Kommunikationspfad 21 rückgekoppelt wird. Bei der in Figur 2 gezeigten Ausführungsform der Slave-Kopplungseinrichtung 36 der Slave-Einheit 3 erfolgt diese Umlenkung des Datenpaketes nach der Verarbeitung durch die Verarbeitungseinrichtung 35, indem der erste Multiplexer 38 seinen zweiten Eingang auf seinen Ausgang aufschaltet.

Die Rekonfiguration der Master-Einheit 1 im Fehlerbetrieb wird ebenfalls vorzugsweise durch den Port der Master-Kopplungseinrichtung 13 selbst ausgelöst. Sobald auf dem zweiten Kommunikationspfad 22 ein Datenpaket eintrifft, öffnet der Port die zweiten Anschlüsse 113, 114 und schließt diese kurz, um das Datenpaket über die Master-Einheit 1 auf dem zweiten Kommunikationspfad 22 weiterzuleiten. Alternativ kann der Fehlerbetrieb der Master-Kopplungseinrichtung 13 auch durch die zentrale Steuereinrichtung 16 der Master-Einheit 1 angestoßen werden. Sobald die Steuereinrichtung 16 der Master-Einheit 1 feststellt, das der erste Kommunikationspfad 21 unterbrochen ist, da die Empfangseinheit TX 12 keine Datenpakete mehr empfängt, steuert die zentrale Steuereinheit 16 die Master-Kopplungseinrichtung 13 in der vorstehenden Weise an, d.h. die zweiten Anschlüsse 113, 114 werden geöffnet und kurzgeschlossen, um über den zweiten Kommunikationspfad 22 Datenpakete durchzuschleusen.

Mit der erfindungsgemäßen Auslegung und Funktionsweise des Master-Slave-Kommunikationssystems ist es auf einfache Weise möglich bei niedrigem Hardware- und Schaltaufwand, insbesondere in der Master-Einheit eine hohe Fehlertoleranz der Datenkommunikation bei Streckenfehler zu erreichen. Die Master-Einheit benötigt nämlich nur eine Sendeeinheit und eine Empfangseinheit zum Betreiben der Doppelringstruktur. Die zusätzlich vorgesehene Master-Kopplungseinrichtung ermöglicht eine Rekonfiguration der Datenübertragung bei Unterbrechung des regulären Kommunikationspfades über den Ersatzkommunikationspfad.

## Patentansprüche

1. Kommunikationssystem mit einer Master-Einheit (1) und einer Mehrzahl von Slave-Einheiten (3),
wobei die Master-Einheit und die Slave-Einheiten jeweils zwei mit einem ersten Kommunikationspfad (21) verbundene erste Anschlüsse und zwei mit einem zweiten Kommunikationspfad (22) verbundene zweite Anschlüsse aufweisen,
wobei die ersten Anschlüsse der Master-Einheit (1) und der Slave-Einheiten (3) über den ersten Kommunikationspfad (21) zu einer ersten Ringstruktur verbunden sind,
wobei die zweiten Anschlüsse der Master-Einheit (1) und der Slave-Einheit (3) über den zweiten Kommunikationspfad (22) zu einer zweiten Ringstruktur verbunden sind,
wobei jede Slave-Einheit (3) eine Slave-Kopplungseinrichtung (36) aufweist, die im Fehlerbetrieb den ersten Kommunikationspfad (21) und den zweiten Kommunikationspfad (22) zwischen den ersten Anschlüssen und den zweiten Anschlüssen in der Slave-Einheit kurzschließt, und
wobei die Master-Einheit eine mit dem einem ersten Anschluss verbundene Sendeeinheit (11) zum Senden von Datensignalen, eine mit dem weiteren ersten Anschluss verbundene Empfangseinheit (12) zum Empfangen von Datensignalen aufweist,
**dadurch gekennzeichnet, dass**
die Master-Einheit weiter eine Master-Kopplungseinrichtung (13) aufweist, die im Fehlerbetrieb die beiden zweiten Anschlüsse (113, 114) kurzschließt.

2. Kommunikationssystem nach Anspruch 1, **dadurch gekennzeichnet, dass** die Master-Einheit (1) ausgelegt ist, die Aufnahme des Fehlerbetriebs durch eine Slave-Einheit auf dem ersten Kommunikationspfad (21) festzustellen und den Fehlerbetrieb der Master-Einheit anzustoßen.

3. Kommunikationssystem nach Anspruch 1 oder 2, **dadurch gekennzeichnet, dass** die Slave-Einheit (3) ausgelegt ist, einen Datenübertragungsfehler zur in Datenübertragungsrichtung nachgeordneten Slave-Einheit festzustellen und den Fehlerbetrieb der Slave-Einheit anzustoßen.

4. Kommunikationssystem nach einem der Ansprüche 1 bis 3, **dadurch gekennzeichnet, dass** die Slave-Einheit (3) eine Verarbeitungseinrichtung (35) zum Verarbeiten von Datensignalen aufweist, wobei die Slave-Kopplungseinrichtung (36) im Normalbetrieb die Verarbeitungseinheit (35) zwischen die mit dem ersten Kommunikationspfad (21) verbundenen ersten Anschlüsse und im Fehlerbetrieb die Verarbeitungseinheit (35) zwischen die mit dem ersten Kommunikationspfad (21)verbundenen ersten Anschlüsse und die mit dem zweiten Kommunikationspfad (22)verbundenen zweiten Anschlüsse schaltet.

5. Verfahren zum Betreiben eines Kommunikationssystems mit einer Master-Einheit und eine Mehrzahl von Slave-Einheiten, wobei die Master-Einheit und die Slave-Einheiten jeweils zwei mit einem ersten Kommunikationspfad verbundene erste Anschlüsse und zwei mit einem zweiten Kommunikationspfad verbundene zweite Anschlüsse aufweisen,
wobei die ersten Anschlüsse der Master-Einheit und der Slave-Einheiten über den ersten Kommunikationspfad zu einer ersten Ringstruktur verbunden sind,
wobei die zweiten Anschlüsse der Master-Einheit und der Slave-Einheiten über den zweiten Kommunikationspfad zu einer zweiten Ringstruktur verbunden sind,
wobei im Normalbetrieb eine ringförmige Datenübertragung erfolgt über den ersten Kommunikationspfad ausgehend von dem einen ersten Anschluss der Master-Einheit zur in Datenübertragungsrichtung ersten über den ersten Kommunikationspfad angeschlossenen Slave-Einheit, von dort zur in Datenübertragungsrichtung nächsten über den ersten Kommunikationspfad angeschlossenen Slave-Einheit, bis zur in Datenübertragungsrichtung letzte über den ersten Kommunikationspfad angeschlossenen Slave-Einheit und dann zu dem weiteren ersten Anschluss der Master-Einheit,
**dadurch gekennzeichnet, dass**
im Fehlerbetrieb eine schleifenförmige Datenübertragung erfolgt über den ersten Kommunikationspfad und den zweiten Kommunikationspfad ausgehend von dem einen ersten Anschluss der Master-Einheit zur in Datenübertragungsrichtung ersten über den ersten Kommunikationspfad angeschlossenen Slave-Einheit, von dort zur in Datenübertragungsrichtung nächsten über den ersten Kommunikationspfad angeschlossenen Slave-Einheit, bis in Datenübertragungsrichtung eine über den ersten Kommunikationspfad angeschlossene Slave-Einheit im Fehlerbetrieb erreicht ist, dann von der Slave-Einheit im Fehlerbetrieb zurück über den zweiten Kommunikationspfad zu dem einen zweiten Anschluss der Master-Einheit, von dem einen zweiten Anschluss der Master-Einheit zu dem weiteren zweiten Anschluss der Master-Einheit, von dem weiteren zweiten Anschluss der Master-Einheit zur in Datenübertragungsrichtung ersten über den zweiten Kommunikationspfad angeschlossenen Slave-Einheit, von dort zur in Datenübertragungsrichtung nächsten über den zweiten Kommunikationspfad angeschlossenen Slave-Einheit, bis in Datenübertragungsrichtung eine über den zweiten Kommunikationspfad angeschlossene Slave-Einheit im Fehlerbetrieb erreicht ist, dann von der Slave-Einheit im Fehlerbetrieb zurück über den ersten Kommunikationspfad zu dem weiteren ersten Anschluss der Master-Einheit.

6. Verfahren nach Anspruch 5, **dadurch gekennzeichnet, dass** die Master-Einheit die Aufnahme des Fehlerbetriebs durch eine Slave-Einheit auf dem ersten Kommunikationspfad feststellt und den Fehlerbetrieb der Master-Einheit anstößt.

7. Verfahren nach Anspruch 5 oder 6, **dadurch gekennzeichnet, dass** die Slave-Einheit einen Datenübertragungsfehler zur in Datenübertragungsrichtung nachgeordneten Slave-Einheit feststellt und den Fehlerbetrieb der Slave-Einheit anstößt.

## Claims

1. Communication system comprising a master unit (1) and a plurality of slave units (3),
wherein the master unit and the slave units each comprise two first terminals connected to a first communication path (21) and two second terminals connected to a second communication path (22),
wherein the first terminals of the master unit (1) and the slave units (3) are connected via the first communication path (21) to form a first ring structure, wherein the second terminals of the master unit (1) and of the slave unit (3) are connected via the second communication path (22) to form a second ring structure, each slave unit (3) comprising a slave coupling unit (36) short-circuiting the first communication path (21) and the second communication path (22) between the first terminals and the second terminals in the slave unit in the failure mode, and
wherein the master unit comprises a transmitting unit (11) connected to the one first terminal for transmitting data signals, a receiving unit (12) connected to the further first terminal for receiving data signals,
**characterized in that**
the master unit further comprises a master coupling unit (13) short-circuiting the two second terminals (113, 114) in the failure mode.

2. The communication system according to claim 1, **characterized in that** the master unit (1) is configured to detect that the failure mode was initialized by a slave unit on the first communication path (21) and to trigger the failure mode of the master unit.

3. The communication system according to claim 1 or 2, **characterized in that** the slave unit (3) is configured to detect a data transmission error with respect to the slave unit connected downstream in the direction of data transmission and to trigger the failure mode of the slave unit.

4. The communication system according to any one of claims 1 to 3, **characterized in that** the slave unit (3) comprises a processing unit (35) for processing data signals, the slave coupling unit (36) in the normal mode switching the processing unit (35) between the first terminals connected to the first communication path (21) and in the failure mode switching the processing unit (35) between the first terminals connected to the first communication path (21) and the second terminals connected to the second communication path (22).

5. Method for operating a communication system comprising a master unit and a plurality of slave units, the master unit and the slave units each comprising two first terminals connected to a first communication path and two second terminals connected to a second communication path,
the first terminals of the master unit and of the slave units being connected via the first communication path to form a first ring structure,
the second terminals of the master unit and of the slave units being connected via the second communication path to form a second ring structure,
a ring-shaped data transmission being carried out in the normal mode via the first communication path starting from the one first terminal of the master unit to the first slave unit connected via the first communication path in the direction of data transmission, from there to the next slave unit connected via the first communication path in the direction of data transmission up to the last slave unit connected via the first communication path in the direction of data transmission and then on to the further first terminal of the master unit, **characterized in that** a loop-shaped data transmission is performed in the failure mode via the first communication path and the second communication path starting from the one first terminal of the master unit to the first slave unit connected via the first communication path in the direction of data transmission, from there to the next slave unit connected via the first communication path in the direction of data transmission, until a slave unit in the failure mode connected via the first communication path in the direction of data transmission is reached, then from the slave unit in the failure mode back via the second communication path to the one second terminal of the master unit, from the one second terminal of the master unit to the further second terminal of the master unit, from the further second terminal of the master unit to the first slave unit connected via the second communication path in the direction of data transmission, from there to the next slave unit connected via the second communication path in the direction of data transmission, until a slave unit in the failure mode connected via the second communication path in the direction of data transmission is reached, then from the slave unit in the failure mode back via the first communication path to the further first terminal of the master unit.

6. The method according to claim 5, **characterized in that** the master unit detects the start of the failure mode by a slave unit on the first communication path and triggers the failure mode of the master unit.

7. The method according to claim 5 or 6, **characterized in that** the slave unit detects a data transmission error with respect to the slave unit connected downstream in the direction of data transmission and triggers the failure mode of the slave unit.

## Revendications

1. Système de communication comprenant une unité maîtresse (1) et une pluralité d'unités esclaves (3), dans lequel l'unité maîtresse et les unités esclaves comportent chacune deux premières bornes connectées à un premier trajet de communication (21) et deux secondes bornes connectées à un second trajet de communication (22),
dans lequel les premières bornes de l'unité maîtresse (1) et des unités esclaves (3) sont connectées par l'intermédiaire du premier trajet de communication (21) à une première structure annulaire,
dans lequel les secondes bornes de l'unité maîtresse (1) et de l'unité esclave (3) sont connectées par l'intermédiaire du second trajet de communication (22) à une seconde structure annulaire,
dans lequel chaque unité esclave (3) comporte un moyen de raccordement d'esclave (36) qui court-circuite en mode d'erreur le premier trajet de communication (21) et le second trajet de communication (22) entre les premières bornes et les secondes bornes de l'unité esclave, et
dans lequel l'unité maîtresse comporte une unité d'émission (11) connectée à ladite une première borne pour émettre des signaux de données, une unité de réception (12) connectée à l'autre première borne pour recevoir des signaux de données,
**caractérisé en ce que** l'unité maîtresse comporte en outre un moyen de raccordement maître (13) qui court-circuite en mode d'erreur les deux secondes bornes (113, 114).

2. Système de communication selon la revendication 1, **caractérisé en ce que** l'unité maîtresse (1) est apte à déterminer le passage en mode d'erreur par l'intermédiaire d'une unité esclave sur le premier trajet de communication (21) et pour déclencher le mode d'erreur de l'unité maîtresse.

3. Système de communication selon la revendication 1 ou 2, **caractérisé en ce que** l'unité esclave (3) est apte à déterminer une erreur de transmission de données vers l'unité esclave disposée en aval dans la direction de transmission de données, et à déclencher le mode d'erreur de l'unité esclave.

4. Système de communication selon l'une quelconque des revendications 1 à 3, **caractérisé en ce que** l'unité esclave (3) comporte un moyen de traitement (35) destiné à traiter des signaux de données, dans lequel le moyen de raccordement d'esclave (36) fait passer l'unité de traitement (35) en mode normal entre les premières bornes connectées au premier trajet de communication (21) et fait passer l'unité de traitement (35) en mode d'erreur entre les premières bornes connectées au premier trajet de communication (21) et les secondes bornes connectées au second trajet de communication (22).

5. Procédé de mise en fonctionnement d'un système de communication comprenant une unité maîtresse et une pluralité d'unités esclaves, dans lequel l'unité maîtresse et les unités esclaves comportent chacune deux premières bornes connectées à un premier trajet de communication et deux secondes bornes connectées à un second trajet de communication,
dans lequel les premières bornes de l'unité maîtresse et des unités esclaves sont connectées par l'intermédiaire du premier trajet de communication à une première structure annulaire,
dans lequel les secondes bornes de l'unité maîtresse et des unités esclaves sont connectées par l'intermédiaire du second trajet de communication à une seconde structure annulaire,
dans lequel, en mode normal, une transmission de données en anneau est effectuée par l'intermédiaire du premier trajet de communication de ladite première borne de l'unité maîtresse à la première unité esclave raccordée, dans la direction de transmission de données, par l'intermédiaire du premier trajet de communication, et de là, à l'unité esclave suivante raccordée, dans la direction de transmission de données, par l'intermédiaire du premier trajet de communication, jusqu'à la dernière unité esclave raccordée, dans la direction de transmission de données, par l'intermédiaire du premier trajet de communication et ensuite, vers l'autre première borne de l'unité maîtresse, **caractérisé en ce que**
en mode d'erreur, une transmission de données en boucle s'effectue par l'intermédiaire du premier trajet de communication et du second trajet de communication de ladite première borne de l'unité maîtresse vers la première unité esclave raccordée, dans la direction de transmission de données, par l'intermédiaire du premier trajet de communication, et de là, vers l'unité esclave suivante raccordée, dans la direction de transmission de données, par l'intermédiaire du premier trajet de communication, jusqu'à ce qu'une unité esclave en mode d'erreur raccordée, dans la direction de transmission de données, par l'intermédiaire du premier trajet de communication, soit atteinte, et ensuite, de l'unité esclave en mode d'erreur pour revenir par l'intermédiaire du second trajet de communication à ladite seconde borne de l'unité maîtresse, depuis ladite seconde borne de l'unité maîtresse vers l'autre seconde borne de l'unité maîtresse, depuis l'autre seconde borne de l'unité maîtresse vers la première unité esclave raccordée, dans la direction de transmission de données, par l'intermédiaire du second trajet de communication, et de là, vers l'unité esclave suivante raccordée, dans la direction de transmission de données, par l'intermédiaire du second trajet de communication, jusqu'à ce qu'une unité esclave en mode d'erreur raccordée, dans la direction de transmission de données, par l'intermédiaire du second trajet de communication soit atteinte, et ensuite de l'unité esclave en mode d'erreur pour revenir à l'autre première borne de l'unité maîtresse par l'intermédiaire du premier trajet de communication.

6. Procédé selon la revendication 5, **caractérisé en ce que** l'unité maîtresse détermine le passage en mode d'erreur par l'intermédiaire d'une unité esclave sur le premier trajet de communication et déclenche le mode d'erreur de l'unité maîtresse.

7. Procédé selon la revendication 5 ou 6, **caractérisé en ce que** l'unité esclave détermine une erreur de transmission de données vers l'unité esclave disposée en aval dans la direction de transmission de données, et déclenche le mode d'erreur de l'unité esclave.
